# EUROPEAN PATENT SPECIFICATION

(11) **EP 2 929 328 B1**
(45) Date of publication and mention of the grant of the patent: **27.05.2020**
(21) Application number: 13852234.7
(22) Date of filing: 31.10.2013
(51) Int. Cl.: G01N 21/87, G01N 21/84, B07C 5/30, G06M 11/00, G06M 1/10

(54) **COUNTING GEMSTONES USING IMAGE PROCESSING**
ZÄHLEN VON EDELSTEINEN MITTELS BILDVERARBEITUNG
COMPTAGE DE PIERRES PRÉCIEUSES À L'AIDE DE TRAITEMENT D'IMAGE

(30) Priority: 31.10.2012 IN 3168MU2012
(43) Date of publication of application: 14.10.2015
(73) Proprietor: Sahajanand Technologies Private Limited, Surat 395 003 (IN)
(72) Inventor: GAYWALA, Rahul, Mahendrakumar, IN-395 009 Surat (IN)
(74) Representative: Nicolle, Olivier
(86) International application number: PCT/IB2013/002430
(87) International publication number: WO 2014/068389

(56) References cited:
- WO-A1-2006/054154
- WO-A2-2009/122287
- JP-A- H0 926 395
- US-A- 5 956 413

## Description

### TECHNICAL FIELD

The present subject matter relates, in general, to image processing, and in particular, to counting gemstones using image processing.

### BACKGROUND

Various industries require counting of objects before dispensing those objects for further processing of those objects. The objects may be counted either manually or by using machines, based on the number of objects to be counted and the cost associated with the process. In cases where the objects are small, such as gemstones used in making ornaments, manual counting of the gemstones is generally considered reliable. However, manual counting may be a time consuming and tedious task. Further, manual counting may not always be accurate and an error in such processes can never be overruled. This may be avoided by using devices, such as counters that are designed to automatically count the gemstones. The counters also save the time required for counting the gemstones, also adding a certain degree of accuracy to the process. Further, the patent document US5956413A describes a method for automatic classification of granular products which are handled in bulk and which include cereal kernels. Moreover, the patent document WO2006/054154A1 describes a hyperspectral imaging apparatus for identifying and sorting target particles within a batch of particles.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.
Figs. 1a & 1b illustrate components of a gemstone counting apparatus, in accordance with an embodiment of the present subject matter.
Figs. 2 to 6 illustrate various perspective views of the gemstone counting apparatus, in accordance with an embodiment of the present subject matter.
Fig. 7 shows a flowchart illustrating a method for counting gemstones using image processing techniques employed by the gemstone counting apparatus, in accordance with an embodiment of the present subject matter.

### DETAILED DESCRIPTION

The present invention is defined by the appended independent claims.

Apparatus and method for counting gemstones using image processing techniques are described herein. A gemstone may be understood as a piece of mineral, which, in cut and polished form, is used to make jewelry or other adornments. As gemstones are considered precious and are available at high costs, they are usually counted every time before being used, such as in making ornaments. Conventional methods for counting gemstones employ manual counting techniques or scale counting. When the gemstones are used in small quantities, counting may be performed manually. However, manually counting a large number of gemstones is a tedious task. The manual counting technique, therefore, is time-consuming and labor intensive.

Another conventional technique for counting the gemstones may include weighing the gemstones and dividing the total weight (observed) of the gemstones by an estimate of the average weight of the gemstones. The counting of the gemstones using the above described technique may not be accurate as the gemstones may not be equal in size and weight. This may provide scope of error in counting the gemstones and may result in an inaccurate number of gemstones being used as a result of the counting. In yet another method, vibrating feeders are used for counting the gemstones. Typically, the vibrating feeders are used for conveying bulk materials, such as nuts and bolts. Application of such feeders for counting the gemstones, such as diamonds may not be useful as diamonds, being the hardest material, may damage the feeders due to friction produced during vibrations. Further, the vibrations may also cause the diamonds to get rubbed against each other which may result in scratches being produced on the diamonds.

The present subject matter discloses aspects related to counting of gemstones using image processing techniques. The present subject matter describes an apparatus for counting of gemstones. In an embodiment, the apparatus includes a housing formed as an enclosure to house the components of the apparatus used for counting the gemstones. The housing, for example, may be formed as a cuboid having five walls, namely, a front wall, two side walls, a rear wall, and a top wall. The apparatus may also include a base for supporting the front wall, the two side walls and the rear wall. The front wall of the housing may include a door that may provide access to the components housed inside the housing. In an example, the door can be slid upwards to access the components of the apparatus. Further, the apparatus may include a tray supported by the housing. The tray may be configured for holding the gemstones and can be accessed through the door, say for placing and removing the gemstones in the tray. Further, the housing may include a middle plate that may be configured to hold a plurality of devices. In an implementation, the plurality of devices may include a camera, a camera housing, a lock for the sliding door, and a light source. Further, the top wall of the housing may be coupled to a plurality of devices, such as a camera, a motor, and a direct, indirect and/or structured light source. In an implementation, the camera may be integrated in the middle plate, such that the camera can be positioned directly above the tray. It will be understood that the camera may be configured to take images of the gemstones in the tray. Additionally, the camera can be moved along various directions to cover an entire area of the tray holding the gemstones. In an implementation, the motor may be configured to facilitate movement of the camera along the top wall and also to enable the camera to take images of the gemstones from different angles. The light source may provide illumination for facilitating capturing of clear images.

In one aspect of the invention, the gemstone counting apparatus includes a housing as an enclosure. Further, the housing may include a tray for holding a plurality of gemstones. The housing may also include a vibrating mechanism including an outer plate and an inner plate, where a first end of the inner plate is coupled to the outer plate by a first coupler and a second coupler. Moreover, a second end of the inner plate is connected to the outer plate by means of an elastic member. In addition, the vibrating mechanism may vibrate the tray at pre-defined time intervals in orbital and linear directions to redistribute and level the plurality of gemstones in the tray. Further, the housing may include a middle plate including a camera. The camera may be positioned directly above the tray and is movable in different directions along the middle plate to capture a plurality of images of the tray each time the tray is vibrated by the vibrating mechanism. In addition, the housing may also include a processing unit to process the plurality of images received from the camera, to count a number of gemstones in the tray.

It will be evident to a person skilled in the art that although the subject matter is explained in context with a gemstone counting apparatus having a housing with five walls, the principles explained herein can be extended to gemstone counting apparatus having a cylindrical housing, a circular housing, or a housing with different shapes. Further, the images captured by the camera may be processed by using well known image processing techniques, such as image filtration, contrast detection, and edge detection, for counting the number of gemstones in the tray. In order to count the gemstones in an accurate manner, the present subject matter may include a vibrating mechanism for shaking or vibrating the tray and the gemstones contained therein. The shaking of the tray can disturb the position of the gemstones and may facilitate in obtaining a good view of the gemstones in the tray. In an implementation, the camera can be configured to capture a plurality of images of the tray, after each time the tray is vibrated by the vibrating mechanism.

In an embodiment, the vibrating mechanism may include an inner plate connected to the tray, an outer plate connected to the inner plate, and a motor or actuator or solenoid connected to the inner plate to actuate the inner plate, and hence, achieve the shaking the tray. The outer plate can be understood to serve as a guide for the movement of the inner plate upon actuation. In said embodiment, the inner plate may be placed within the outer plate, such that a first end of the inner plate may be connected to the outer plate by means of an elastic member, such as a spring. Further, the housing may include a bearing enclosure including one or more bearings mounted on an output shaft of the motor. The bearings can further have an eccentric piece mounted thereon, configured to facilitate in shaking the tray upon rotation of the output shaft of the motor. To do so, the eccentric piece may be connected to a second end of the inner plate by means of couplers. It will be understood that, in an embodiment, the motor can also be enclosed inside the bearing enclosure. In the present implementation, the actuation of the eccentric piece by the motor may cause the inner plate to move in a to and fro motion, for shaking the tray, and therefore, disturbing the arrangement or placement of the gemstones in the tray.

In an embodiment, the functionality of the actuator may be controlled via a computing device, such as a personal computer and a laptop, having a software driven processing unit, a memory unit in communication with the processing unit, and an interface. The memory unit may include program instructions and data that may be accessed and processed by the processing unit, such that the processing unit can control the functionality and operations related to the gemstone counting apparatus. The interface may include a variety of software and hardware interfaces, for example, interface for peripheral device(s), such as a keyboard, a keypad, a touch sensitive screen, and a mouse. Further, the processing unit may be in communication with the vibrating mechanism including the inner plate, the outer plate, the motor, and the eccentric piece. In an implementation, the user may provide inputs through the interface. Based on user input, the processing unit may send a signal to the actuator to vibrate the tray. In an alternative embodiment, all or part of the functionality of the vibrating mechanism may be implemented as pre-programmed firmware elements, such as application specific integrated circuits (ASICs), electrically erasable programmable read-only memories (EEPROMs), or other related components. These pre-programmed firmware elements may include a series of instructions that may readable directly by the processing unit.

Further, the housing may also include a timer that may be preset, for example, by a user, based on which the time for which tray may vibrate can be regulated. Once the time set by the timer is over, the camera may capture images of the gemstones, and provide the images to the processing unit. The processing unit can be configured to count the number of gemstones in the tray by using the image processing techniques. Accordingly, the present subject matter facilitates shaking the tray and counting the number of gemstones after each vibrate. Finally, a mode value may be determined based on all the images that are captured to find out the number of gemstones in the tray. It will be evident that the mode value may refer to the count occurring maximum number of times.

In another implementation, the median value of the different measurements may be taken as the number of gemstones in the tray. The median values may be understood as a middle value of a data set when it has been arranged in ascending order. In yet another implementation, the number of gemstones in the tray may be determined once a particular count has consecutively come for a pre-defined number of times. For example, for three consecutive vibrations of the tray, if the number of gemstones remains the same, the apparatus may consider that as final.

Accordingly, the present subject matter may provide a quick and inexpensive method of counting the gemstones from digital images. This may not only reduce the chances of error but may also substantially lower human intervention in the counting process. Further, the present subject matter avoids friction between the gemstones, which in turn reduces scratches on the gemstones, thereby preserving their value.

It should be noted that the description merely illustrates the principles of the present subject matter. It will thus be appreciated that those skilled in the art will be able to devise various arrangements that, although not explicitly described herein, embody the principles of the present subject matter and are included within its spirit and scope. Furthermore, all examples recited herein are principally intended to be only for pedagogical purposes to aid the reader in understanding the principles of the present subject matter and the concepts contributed by the inventor(s) to furthering the art. Moreover, all statements herein reciting principles, aspects, and embodiments of the present subject matter, as well as specific examples thereof, are intended to encompass equivalents thereof.

While aspects of described methods for counting the gemstones can be implemented in any number of different production environments, and/or configurations, the embodiments are described in the context of the following environment(s). It will be evident to a person skilled in the art that although the subject matter is explained in context of gemstones, the principles explained herein can be extended to counting of other small objects. For example, an electronic circuit manufacturer may use the apparatus to count small electronic components like resistors, capacitors, ICs, etc.

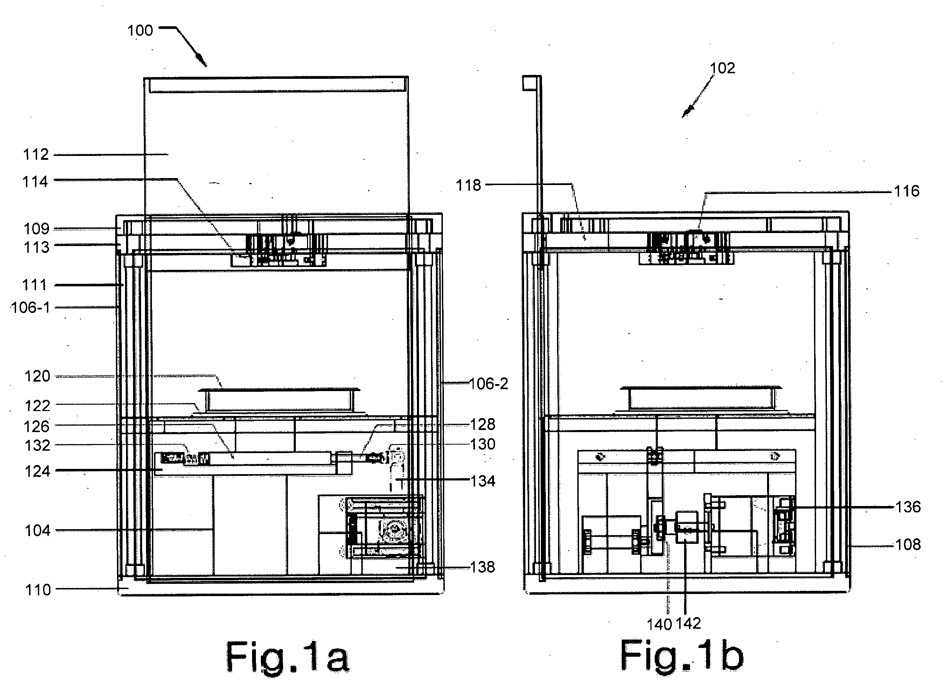

Figs. 1a & 1b illustrate components of a gemstone counting apparatus 100 (hereinafter referred as apparatus 100), in accordance of the present subject matter with an embodiment. The apparatus 100 may be configured to use image processing techniques for counting the gemstones. The apparatus 100 may include a housing 102, formed as an enclosure, having five walls, namely, a front wall 104, two side walls 106-1 and 106-2, a rear wall 108, and a top wall 109, connected together to form the housing 102. The apparatus 100 may also include a base 110 for supporting the front wall 104, two side walls 106-1 and 106-2, and the rear wall 108. Further, the housing 102 may include pillars 111 for supporting the walls. The pillars 111 may be configured to make the housing 102 light in weight. These pillars 111 may be then covered by aluminum plates for providing a covering to the housing 102 and thus forming the walls.

Additionally, an upper portion of the front wall 104 may be configured to be movable along a vertical axis, such that the upper portion may slide upwards to form a sliding door 112 of the housing 102. Further, the housing 102 may include a middle plate 113 configured to hold a plurality of devices. In an implementation, the plurality of devices may include a camera 114, a camera housing 116, a lock 118 for the sliding door 112, and a light source (not shown). In an implementation, the light source may be disposed below the middle plate.

The apparatus 100 can further include a tray 120 for holding the gemstones therein, the tray 120 being connected to and supported by the housing 102. In an example, the tray 120 may be supported by a separator plate 122 connected to the housing 102. The separator plate 122 may provide a smooth platform for placing the tray 120 thereon. As will be understood, the camera 114 can be placed vertically, directly above the tray 120 to capture images of the gemstones in the tray 120. Further, the light source may provide illumination which may facilitate in capturing the image. In an implementation, the light source may include a plurality of light sources spaced along an axis away from, and facing the tray 120, for directing the light rays on the gemstones. As mentioned earlier, the light source may be configured to project direct, indirect, and/or structured light onto the gemstones. In another implementation, the light source may be configured to facilitate structured light triangulation method. The structured light triangulation method may involve illuminating an object with a pre-defined pattern of light/laser. Such pattern of the light/laser may strike the object, such as the gemstones, and may get reflected. This pattern of reflection of the light/laser may be captured with the help of the camera 114 for counting the number of gemstones through blob analysis.

In addition, the camera 114 can be moved in various directions, say in order to capture the images of the gemstones in the tray 120 from different angles and to be able to capture and cover the entire area of the tray 120. In an implementation, the camera housing 116 may be designed to allow movement of the camera 114, such as along the top wall 109 of the housing 102. In an example, a posterior surface of the top wall 109, i.e., the surface of the top wall 109 facing the tray 120, can be provided with a plurality of guiding mechanisms for facilitating the movement of the camera 114 in different directions. Further, in an implementation, the camera housing 116 may be designed to provide the sliding movement of the door of the housing 102. In another implementation, the light source may be integrated within the camera housing 116 or may be located outside the camera housing.

The housing 102 may further include a vibrating mechanism for shaking the tray 120 containing the gemstones after a pre-defined time period. In an implementation, the vibrating mechanism may be located below the separator plate 122. The shaking of the tray 120 may facilitate in arranging the gemstones in one level such that the gemstones do not get overlapped or placed one over the other. In an implementation, the vibrating mechanism may vibrate the tray 120 in an orbital and linear direction to make sure that any overlapped surfaces of the gemstones may be placed in a linear pattern. Such a shaking may also take into consideration that none of the gemstones fall from the tray 120. The vibrating mechanism may include an outer plate 124 that may be fixed at a position and is stationary. Furthermore, in an embodiment, an inner plate 126 can be disposed in the outer plate 124 and may be adapted to move along a surface of the outer plate 124, the inner plate 126 further coupled to the tray 120 to actuate the tray 120.

In an implementation, the surface of the outer plate 124 on which the inner plate 126 is disposed, can include a plurality of guiding elements (not shown) for facilitating the movement of the inner plate 126. Further, the inner plate 126 may be coupled to the outer plate 124 by means of a first coupler 128 and a second coupler 130. For example, a first end of the inner plate 126 may be connected to the outer plate 124 by means of the first and the second coupler 128, 130, and a second end of the inner plate 126 may be connected to the outer plate 124 by means of an elastic member 132. In an implementation, then elastic member 132 may be a spring, a rubber connector, or any other elastic connector. The elastic member 132 may enable the inner plate 126 to move along the outer plate 124 in a reciprocating manner. In an implementation, the second coupler 130 may be made of a flexible material, such as rubber. Accordingly, the outer plate 124, the inner plate 126, the first and the second couplers 128 and 130, and the elastic member 132 may be considered as a part of the vibrating mechanism of the apparatus 100.

In an exemplary embodiment, the separator plate 122, the outer plate 124, the inner plate 126, the first and the second couplers 128 and 130 respectively, and the elastic member 132 may form to a platform. This platform may be configured to place the tray 120 in such a manner so as to provide some degrees of freedom in X and Y directions.

The housing 102 may further include an eccentric piece 134 that may further facilitate the movement of the inner plate 126 along the outer plate 124. For example, the eccentric piece 134 can be connected to the second coupler 130 may exert pressure on the second coupler 130 such that the elastic member 132 at the other end of the inner plate 126 may contract. In an implementation, the eccentric piece 134 may be an eccentric pulley. Accordingly, the elastic member 132 may exert a reaction force on the inner plate 126 thereby imparting a reciprocatory motion to the tray 120 and shaking the tray 120. The tray 120 may vibrate as a result of the movement of the eccentric piece 134 and biasing of the elastic member 132.

In an implementation, the movement of the eccentric piece 134 may be initiated by a motor 136 that may be enclosed within a bearing enclosure 138. It will be evident to a person skilled in the art that the motor 136 may be any actuator, such as a solenoid, an electrical, pneumatic, or hydraulic actuator. The bearing enclosure 138 may be placed within the housing 102 of the apparatus 100. In said implementation, the bearing enclosure 138 may include a bearing 140 that may be mounted on an output shaft 142 of the motor 136. As illustrated in the figures, the eccentric piece 134 may be mounted on the output shaft 142 by means of the bearing 140.

In operation, the rotation of the output shaft 142 of the motor 136, say a stepper motor, may impart oscillatory movements in the eccentric piece 134. As explained earlier, the eccentric piece 134 is connected to the second plate 126 by means of the first coupler 128 and the second coupler 130. Accordingly, the motor 136 may enable the second plate 126 to move which in turn may vibrate the tray 120 containing the gemstones. The elastic member 132 may facilitate in positioning the tray 120 at a centre position of the separator plate 122.

In another implementation, the tray 120 may be vibrated by using a solenoid (not shown) that may be intermittently charged for imparting vibrations in the tray 120. The solenoid may be configured to generate directional, linear oscillations in the tray 120 connected to the elastic member 132. Further, in yet another implementation, a cam driven actuator may be installed instead of the motor 136 for vibrating the tray 120.

In an implementation, the bearing enclosure 138 may include additional bearings and gears that may facilitate in maintaining speed at which the tray 120 is vibrated by the vibrating mechanism. Further, the images captured by the camera 114 may be analyzed by a processing unit (not shown) of the apparatus, using various image processing techniques. These techniques may be selected from various well known methods of counting objects using image processing. For example, the image processing technique that may be employed in the present subject matter may facilitate binarization of the image captured by the camera. Thereafter, various edge detection techniques may be employed for demarcating edges of each of the gemstones from the other gemstones in the image. Further, shape and size of each of the gemstone may be detected in the image. Based on the identified shape and size, the processing unit can identify the number of gemstones, type, and size grade.

For example, the image processing techniques used for counting the number of gemstones may include a blob analysis technique. As will be understood, a blob may be considered as an area of touching pixels with same logical state. All pixels in an image that belong to a blob are in a foreground state. The blob analysis technique may include a series of processing operations and analysis functions that produce information about any 2-dimensional shape in an image. Further, the blob analysis technique may detect joined blobs. For example, if the image captured by the camera 114 may include a pattern '8', this may be indicative of two pieces of the gemstones placed adjacent to each other.

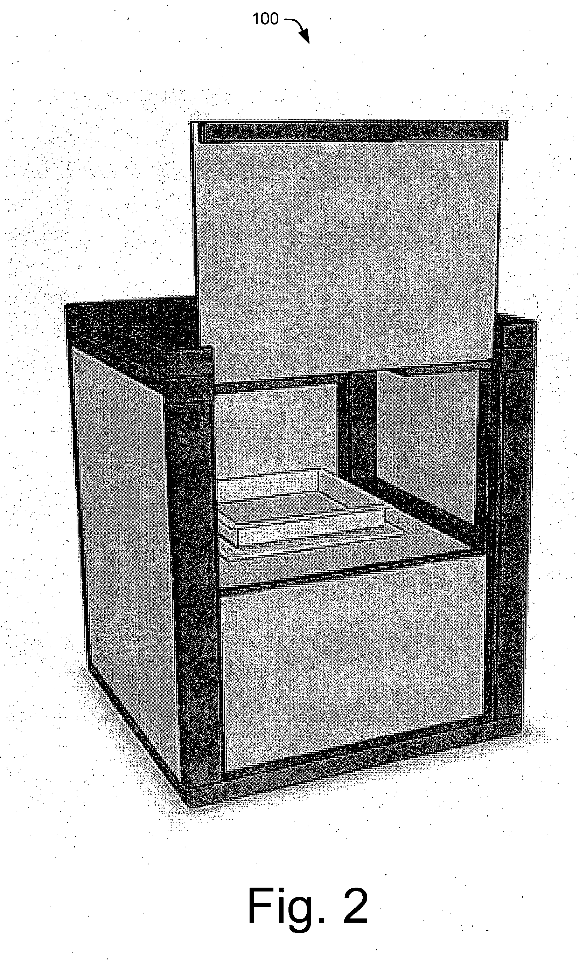

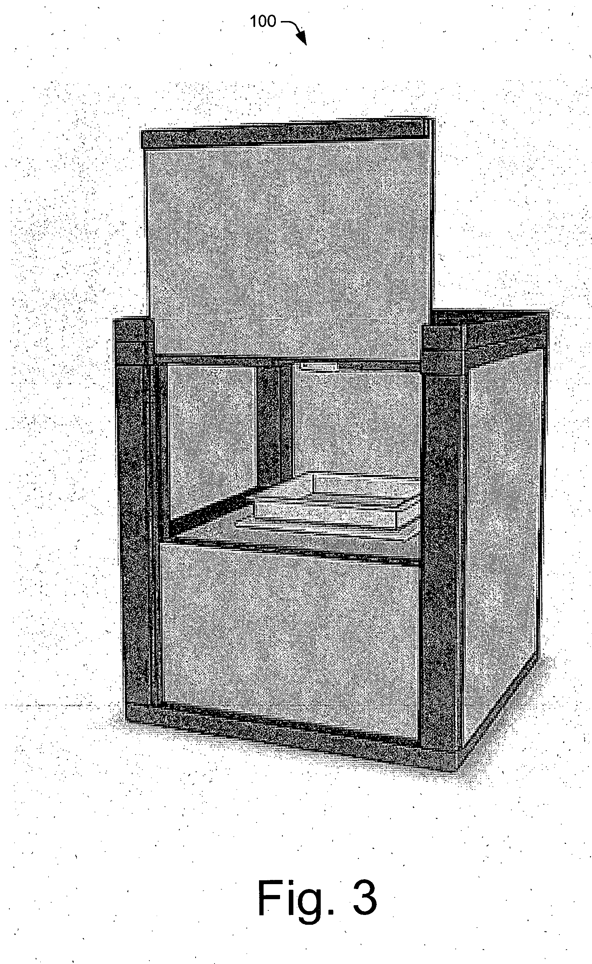

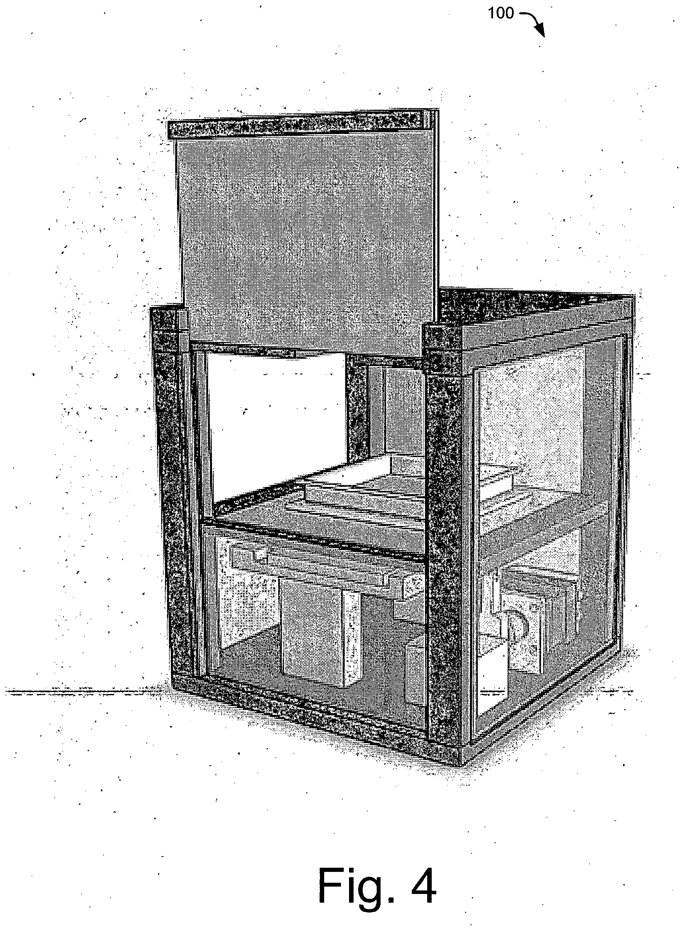

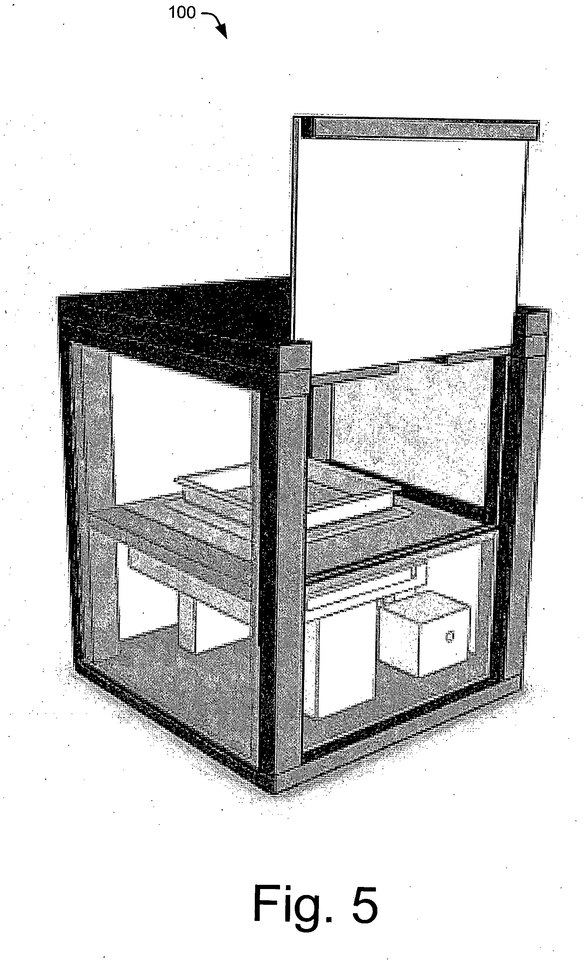

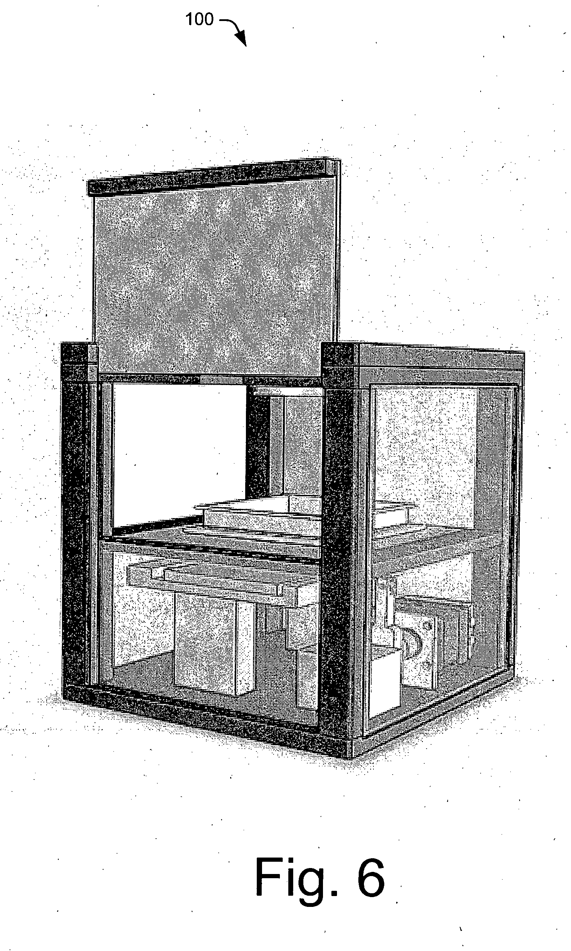

Referring to Figs. 2 to 6, various perspective views of the apparatus 100 are illustrated, in accordance with an embodiment of the present subject matter. The various perspective views illustrate the components and their relative position with each other, for operation of the apparatus 100.

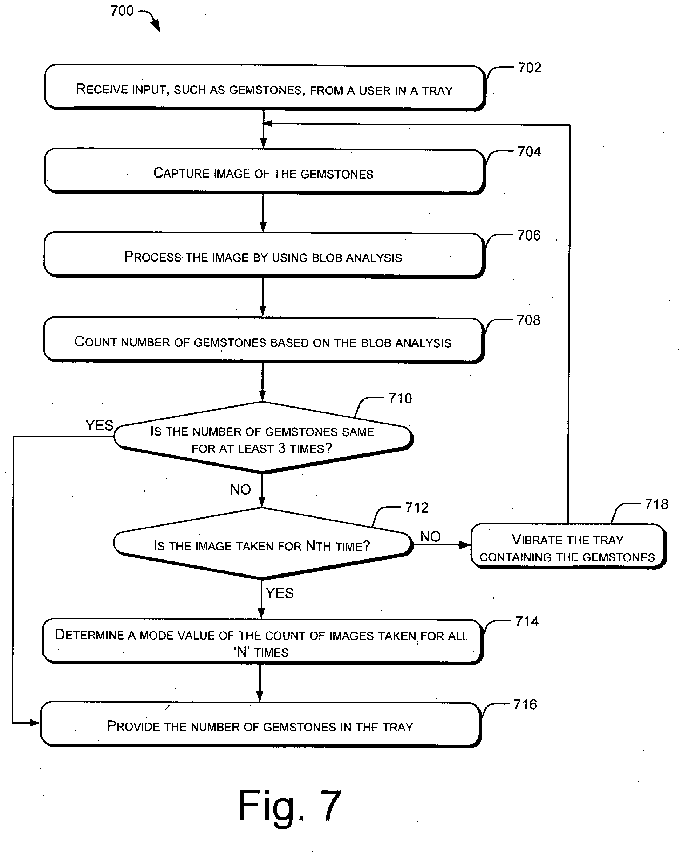

Referring to Fig. 7, a flowchart showing a method 700 for counting the gemstones using the image processing techniques is illustrated, in accordance with an embodiment of the present subject matter. The method 700 starts at block 702. At block 702, a plurality of gemstones may be received in the tray 120 of the apparatus 100. It will be understood that the gemstones may be provided by a user.

The gemstones may be illuminated by the light source as described above. In an implementation, structural light triangulation method may be used for illuminating the gemstones with a pre-defined pattern of light/laser. When such pattern of the light/laser strikes the gemstones, the beam of light may get interrupted. In another implementation, X-ray techniques may be used for identifying the gemstones. Further, the tray 120 containing the gemstones is vibrated at pre-defined time intervals to redistribute and level the plurality of gemstones in the tray 120.

After each pre-defined time interval, the camera 114 may capture an image of the gemstones received in the tray 120, as shown in block 704. In an example, the camera 114 may capture digital images. Subsequently, at block 706, the image captured from the camera 114 may be processed by the processing unit, say using the blob analysis technique. The image processing techniques may facilitate in providing clear image and detecting shapes of the gemstones.

At block 708, the number of gemstones captured in the image may be counted, say by the processing unit. Thereafter, at block 710, it is determined whether the number of gemstones captured in the image is same for a predefined number of times, say for at least three times, or not. If so, the count of gemstones is considered as final and provided to a user. However, at block 710, if the number of gemstones is not same for the predefined number of times, the method moves to block 712.

At block 712, it is determined whether the image is taken for a predetermined number of times for a specific set of gemstones or not. If so, the method 700 may move to block 714. At block 714, a mode value of all counts may be taken. As will be understood, the mode value is the one that occurs most frequently in a set of data. In an implementation, the method 700 may be automatically timed-out after the gemstones have been counted for the nth time. In an implementation of the present subject matter, a median value of the number of counts may be calculated to determine the number of gemstones in the tray 120. In yet another implementation, the number of gemstones in the tray 120 may be determined once the particular count has consecutively come for a pre-defined number of time. For example, for three consecutive vibrations of the tray 120, if the number of gemstones turns out to be equal, the method 700 may move to block 716. Accordingly, at block 716, the count of the gemstones may be provided by means of a display.

Referring back to block 712, if the image is not taken for the predetermined number of times, the method 700 may move to block 718. At block 718, the tray 120 containing the gemstones may be vibrated, by means of the vibrating mechanism, to re-arrange the gemstones in the tray 120. Thereafter, the method 700 may be directed back to block 704.

In an implementation, the method 700 for counting the gemstones may be optimized by using size-wise analysis and shape-wise analysis. The image processing algorithm can identify size, shape and orientation of blobs, i.e., gemstones. Based on this information, it can provide count of gemstones of particular shape and/or size or combination.

Although embodiments for counting gemstones using image processing have been described in language specific to structural features and/or methods, it is to be understood that the present subject matter is not necessarily limited to the specific features or methods described. Rather, the specific features and methods are disclosed as exemplary implementations for counting gemstones using image processing.

## Claims

1. A gemstone counting apparatus (100) comprising:
a housing (102) as an enclosure, the housing (102) comprising:
a tray (120) for holding a plurality of gemstones;
the apparatus being **characterized by**
a vibrating mechanism comprising an outer plate (124) and an inner plate (126), wherein a first end of the inner plate (126) is coupled to the outer plate (124) by a first coupler (128) and a second coupler (130), and a second end of the inner plate (126) is connected to the outer plate (124) by means of an elastic member (132), and wherein the vibrating mechanism is configured to vibrate the tray (120) at pre-defined time intervals in orbital and linear directions to redistribute and level the plurality of gemstones in the tray (120);
a middle plate (113) comprising a camera (114) coupled thereto, wherein the camera (114) is positioned directly above the tray (120) and is movable in different directions along the middle plate (113) to capture a plurality of images of the tray (120) each time the tray (120) is vibrated by the vibrating mechanism; and
a processing unit to process the plurality of images received from the camera (114), to count a number of gemstones in the tray (120).

2. The gemstone counting apparatus (100) as claimed in claim 1, wherein the housing (120) includes a front wall (104), two side walls (106-1, 106-2), a rear wall (108), and a top wall (110).

3. The gemstone counting apparatus (100) as claimed in claim 2, wherein an upper portion of the front wall (104) of the housing (102) is configured to be moveable along a vertical axis to form a sliding door (112), and wherein the sliding door (112) provides access to the plurality of gemstones held by the tray (120).

4. The gemstone counting apparatus (100) as claimed in claim 1, wherein,
the outer plate (124) is fixed at a position in the housing (102) and the outer plate (124) is stationary; and
the inner plate (126) is coupled to the outer plate (124) such that the inner plate (126) is adapted to move along a surface of the outer surface (124) to actuate the tray (120).

5. The gemstone counting apparatus (100) as claimed in claim 1 wherein the second coupler (130) is made of a flexible material.

6. The gemstone counting apparatus (100) as claimed in claim 1, wherein the housing (102) comprises:
an eccentric piece (134) connected to the second coupler (130), wherein the eccentric piece (134) is adapted to exert pressure on the second coupler (130) to compress the elastic member (132) provided at another end of the inner plate (126); and
a motor (136) coupled to the eccentric piece (134) through an output shaft (142), wherein the motor (136) initiates movement of the eccentric piece (134).

7. The gemstone counting apparatus (100) as claimed in claim 6, wherein the actuator is one of a solenoid, an electrical actuator, a pneumatic actuator, and a hydraulic actuator.

8. The gemstone counting apparatus (100) as claimed in claim 2, wherein the housing (102) further comprises a timer for setting a duration of tine for which the tray (120) is vibrated.

9. The gemstone counting apparatus (100) as claimed in claim 1, wherein the middle plate (113) is configured to hold a plurality of devices.

10. The gemstone counting apparatus (100) as claimed in claim 9, wherein the plurality of devices includes a camera housing (116), a lock (118) for a door (112), and a light source.

11. The gemstone counting apparatus (100) as claimed in claim 1, wherein the processing unit counts the number of gemstones by a blob analysis technique.

12. A method for counting gemstones comprising:
receiving, from a user, a plurality of gemstones in a tray (120), wherein the plurality of gemstones are illuminated by a light source;
vibrating the tray (120) at pre-defined time intervals in an orbital and a linear direction to redistribute and level the plurality of gemstones in the tray (120);
capturing a plurality of images of the of gemstones by a camera (114) positioned directly above the tray (120) and movable in different directions along a middle plate (113), wherein the plurality of images is processed by a processing unit;
counting by the processing unit, number of gemstones in the tray (120), based on the image processing;
determining by the processing unit, whether the number of gemstones captured in each of the plurality of images is different;
based on the determination by the processing unit, computing a mode value for the number of gemstones counted for each of the plurality of images; and
providing by the processing unit, a count of the plurality of gemstones in the tray (120) to the user, based on the computation.

13. The method as claimed in claim 12, wherein when the number of gemstones counted in each of the plurality of images taken consecutively is sane, the count of the gemstones is provided to the user without computing the mode value.

14. The method as claimed in claim 12, wherein the image processing is performed by a blob analysis technique.

## Patentansprüche

1. Ein Schmuckstein-Zählgerät (100), umfassend:
ein Gehäuse (102) als eine Umschließung, wobei das Gehäuse (102) umfasst:
eine Ablage (120) zum Halten einer Vielzahl von Schmucksteinen;
wobei das Gerät durch einen Vibrationsmechanismus gekennzeichnet ist, umfassend eine äußere Platte (124) und eine innere Platte (126), wobei ein erstes Ende der inneren Platte (126) an die äußere Platte (124) durch einen ersten Koppler (128) und einen zweiten Koppler (130) gekoppelt ist und ein zweites Ende der inneren Platte (126) an die äußere Platte (124) mittels eines elastischen Organs (132) gekoppelt ist und wobei der Vibrationsmechanismus zum Vibrieren der Ablage (120) in vorbestimmten Zeitintervallen in kreisförmigen und linearen Richtungen zum Umverteilen und Nivellieren der Vielzahl von Schmucksteinen in der Ablage (120) ausgestaltet ist;
eine mittlere Platte (113), umfassend eine daran gekoppelte Kamera (114), wobei die Kamera (114) direkt über der Ablage (120) positioniert und in unterschiedlichen Richtungen entlang der mittleren Platte (113) zum Erfassen einer Vielzahl von Bildern der Ablage (120) jedes Mal dann bewegbar ist, wenn die Ablage (120) durch den Vibrationsmechanismus vibriert ist; und
eine Verarbeitungseinheit zum Verarbeiten einer Vielzahl von von der Kamera (114) empfangenen Bildern zum Zählen einer Anzahl von Schmucksteinen in der Ablage (120) .

2. Schmuckstein-Zählgerät (100) gemäß Anspruch 1, wobei das Gehäuse (120) eine Vorderwand (104), zwei Seitenwände (106-1, 106-2), eine Rückwand (108) und eine obere Wand (110) umfasst.

3. Schmuckstein-Zählgerät (100) gemäß Anspruch 2, wobei ein oberer Abschnitt der Vorderwand (104) des Gehäuses (102) ausgestaltet ist, um entlang einer vertikalen Achse bewegbar zu sein, um eine Gleittür (112) zu bilden und wobei die Gleittür (112) einen Zugang zu der Vielzahl von Schmucksteinen bereitstellt, die von der Ablage (120) gehalten ist.

4. Schmuckstein-Zählgerät (100) gemäß Anspruch 1, wobei die äußere Platte (124) an einer Position im Gehäuse (102) befestigt ist und die äußere Platte (124) stationär ist; und
die innere Platte (126) derart an die äußere Platte (124) gekoppelt ist, dass die innere Platte (126) geeignet ist, um sich entlang einer Oberfläche der äußeren Fläche (124) zu bewegen, um die Ablage (120) zu betätigen.

5. Schmuckstein-Zählgerät (100) gemäß Anspruch 1, wobei der zweite Koppler (130) aus einem flexiblen Material hergestellt ist.

6. Schmuckstein-Zählgerät (100) gemäß Anspruch 1, wobei das Gehäuse (102) umfasst,
ein exzentrisches Teil (134), das an den zweiten Koppler (130) angeschlossen ist, wobei das exzentrische Teil (134) zum Ausüben eines Drucks auf den zweiten Koppler (130) geeignet ist, um das elastische Organ (132) zu komprimieren, das an einem anderen Ende der inneren Platte (126) bereitgestellt ist; und einen Motor (136), der an das exzentrische Teil (134) durch eine Abgangswelle (142) gekoppelt ist, wobei der Motor (136) eine Bewegung des exzentrischen Teils (134) initiiert.

7. Schmuckstein-Zählgerät (100) gemäß Anspruch 6, wobei das Stellglied entweder ein Solenoid, ein elektrisches Stellglied, ein pneumatisches Stellglied oder ein hydraulisches Stellglied ist.

8. Schmuckstein-Zählgerät (100) gemäß Anspruch 2, wobei das Gehäuse (102) weiterhin eine Zeituhr zum Einstellen einer Zeitdauer umfasst, über die die Ablage (120) zum Vibrieren gebracht wird.

9. Schmuckstein-Zählgerät (100) gemäß Anspruch 1, wobei die mittlere Platte (113) zum Halten einer Vielzahl von Vorrichtungen ausgestaltet ist.

10. Schmuckstein-Zählgerät (100) gemäß Anspruch 9, wobei die Vielzahl von Vorrichtungen ein Kameragehäuse (116), ein Schloss (118) für eine Tür (112) und eine Lichtquelle enthält.

11. Schmuckstein-Zählgerät (100) gemäß Anspruch 1, wobei die Verarbeitungseinheit die Anzahl von Schmucksteinen durch eine Tropfenanalyse-Technik zählt.

12. Verfahren zum Zählen von Schmucksteinen, umfassend:
Empfangen einer Vielzahl von Schmucksteinen in einer Ablage (120) von einem Nutzer, wobei die Vielzahl von Schmucksteinen durch eine Lichtquelle beleuchtet wird;
Vibrieren der Ablage (120) in vorbestimmten Zeitintervallen in einer kreisförmigen und einer linearen Richtung zum Umverteilen und Nivellieren der Vielzahl von Schmucksteinen in der Ablage (120);
Erfassen einer Vielzahl von Bildern der Schmucksteine durch eine Kamera (114), die direkt oberhalb der Ablage (120) angeordnet und in unterschiedlichen Richtungen entlang einer mittleren Platte (113) beweglich ist, wobei die Vielzahl von Bildern durch eine Verarbeitungseinheit verarbeitet wird;
Zählen der Anzahl von Schmucksteinen in der Ablage (120) durch die Verarbeitungseinheit, basierend auf der Bildverarbeitung;
Bestimmen durch die Verarbeitungseinheit, ob die Anzahl von Schmucksteinen, die in jeder Vielzahl von Bildern erfasst ist, unterschiedlich ist;
Berechnen eines Moduswertes für die Anzahl von Schmucksteinen, die für jede Vielzahl von Bildern gezählt wird, basierend auf der Bestimmung durch die Verarbeitungseinheit; und
Bereitstellen einer Zählung der Vielzahl von Schmucksteinen durch die Verarbeitungseinheit in der Ablage (120) für den Nutzer, basierend auf der Zählung.

13. Verfahren gemäß Anspruch 12, wobei, wenn die Anzahl von Schmucksteinen, die in jeder Vielzahl von nacheinander aufgenommenen Bildern richtig ist, die Zählung der Schmucksteine dem Nutzer ohne Berechnen des Moduswertes bereitgestellt wird.

14. Verfahren gemäß Anspruch 12, wobei die Bildverarbeitung durch eine Tropfenanalyse-Technik durchgeführt wird.

## Revendications

1. Appareil de comptage de pierres précieuses (100) comprenant :
un boîtier (102) servant d'enceinte, le boîtier (102) comprenant :
un plateau (120) pour contenir une pluralité de pierres précieuses ;
l'appareil étant **caractérisé par** un mécanisme de vibration comprenant une plaque extérieure (124) et une plaque intérieure (126), dans lequel une première extrémité de la plaque intérieure (126) est accouplée à la plaque extérieure (124) au moyen d'un premier dispositif de couplage (128) et d'un second dispositif de couplage (130), et une seconde extrémité de la plaque intérieure (126) est reliée à la plaque extérieure (124) au moyen d'un élément élastique (132), et dans lequel le mécanisme de vibration est configuré de manière à faire vibrer le plateau (120) au cours d'une période prédéfinie dans les directions orbitales et linéaires afin de redistribuer et d'égaliser la pluralité de pierres précieuses sur le plateau (120) ;
une plaque intermédiaire (113) comprenant une caméra (114) qui y est accouplée, dans laquelle, la caméra (114) est positionnée directement au-dessus du plateau (120) et peut être déplacée dans différentes directions le long de la plaque intermédiaire (113) pour capturer une pluralité d'images du plateau (120) chaque fois que le mécanisme de vibration fait vibrer le plateau (120) ; et
une unité de traitement pour traiter la pluralité d'images reçues de la caméra (114), pour compter un nombre de pierres précieuses sur le plateau (120).

2. Appareil de comptage de pierres précieuses (100) selon la revendication 1, dans lequel le boîtier (120) comprend une paroi avant (104), deux parois latérales (106-1, 106-2), une paroi arrière (108), et une paroi supérieure (110).

3. Appareil de comptage de pierres précieuses (100) selon la revendication 2, dans lequel une partie supérieure de la paroi avant (104) du boîtier (102) est configurée de manière à pouvoir être déplacée le long d'un axe vertical pour former une porte coulissante (112), et dans lequel la porte coulissante (112) donne accès à la pluralité des pierres précieuses présentes sur le plateau (120).

4. Appareil de comptage de pierres précieuses (100) selon la revendication 1, dans lequel la plaque extérieure (124) est fixée dans une position dans le boîtier (102) et la plaque extérieure (124) est stationnaire ; et
la plaque intérieure (126) est accouplée à la plaque extérieure (124) de manière à ce que la plaque intérieure (126) s'adapte pour se déplacer le long d'une surface de la surface extérieure (124) pour actionner le plateau (120).

5. Appareil de comptage de pierres précieuses (100) selon la revendication 1, dans lequel le second dispositif d'accouplement (130) est en matériau flexible.

6. Appareil de comptage de pierres précieuses (100) selon la revendication 1, dans lequel le boîtier (102) comprend :
une pièce excentrique (134) raccordée au second dispositif d'accouplement (130), dans lequel la pièce excentrique (134) est adaptée de manière à exercer une pression sur le second dispositif d'accouplement (130) pour comprimer l'élément élastique (132) prévu à une autre extrémité de la plaque intérieure (126) ; et un moteur (136) accouplé à la pièce excentrique (134) au moyen d'un arbre de sortie (142), dans lequel le moteur (136) déclenche le mouvement de la pièce excentrique (134) .

7. Appareil de comptage de pierres précieuses (100) selon la revendication 6, dans lequel l'actionneur est un d'une électrovanne, d'un actionneur électrique, d'un actionneur pneumatique, et d'un actionneur hydraulique.

8. Appareil de comptage de pierres précieuses (100) selon la revendication 2, dans lequel le boîtier (102) comprend en outre une minuterie pour définir une période de temps pendant laquelle le plateau (120) est soumis à des vibrations.

9. Appareil de comptage de pierres précieuses (100) selon la revendication 1, dans lequel la plaque intermédiaire (113) est configurée de manière à contenir une pluralité de dispositifs.

10. Appareil de comptage de pierres précieuses (100) selon la revendication 9, dans lequel la pluralité de dispositifs inclut un boîtier de caméra (116), un verrou (118) pour une porte (112), et une source lumineuse.

11. Appareil de comptage de pierres précieuses (100) selon la revendication 1, dans lequel l'unité de traitement compte le nombre de pierres précieuses au moyen d'une technique d'analyse Blob.

12. Procédé de comptage de pierres précieuses comprenant :
la réception, par un utilisateur, d'une pluralité de pierres précieuses dans un plateau (120), dans lequel la pluralité de pierres précieuses est éclairée par une source lumineuse ;
la vibration du plateau (120) pendant des périodes de temps prédéfinies dans une direction orbitale et linéaire afin de redistribuer et d'égaliser la pluralité de pierres précieuses sur le plateau (120) ;
la capture d'une pluralité d'images des pierres précieuses par une caméra (114) positionnée directement au-dessus du plateau (120) et pouvant se déplacer dans différentes directions le long d'une plaque intermédiaire (113), dans laquelle la pluralité d'images est traitée par une unité de traitement ;
le comptage, par l'unité de traitement, du nombre de pierres précieuses sur le plateau (120), basé sur le traitement d'image ;
la détermination par l'unité de traitement d'une éventuelle différence du nombre de pierres précieuses capturé dans chacune de la pluralité d'images ;
sur la base de la détermination par l'unité de traitement, le calcul d'une valeur modale pour le nombre de pierres précieuses compté pour chacune de la pluralité d'images ; et
la fourniture par l'unité de traitement, d'un décompte de la pluralité de pierres précieuses sur le plateau (120) pour l'utilisateur, sur la base du calcul.

13. Procédé selon la revendication 12, dans lequel lorsque le nombre de pierres précieuses compté dans chacune de la pluralité d'images prises consécutivement est raisonnable, le décompte des pierres précieuses est fourni à l'utilisateur sans calcul de la valeur modale.

14. Procédé selon la revendication 12, dans lequel le traitement d'image est réalisé par une technique d'analyse Blob.
